# DEMANDE DE BREVET EUROPEEN

(11) **EP 0 622 261 A1**
(43) Date de publication de la demande: **02.11.1994**
(21) Numéro de dépôt: 94400918.2
(22) Date de dépôt: 28.04.1994
(51) Int. Cl.: B60J 10/08

(54) **Dispositif d'étanchéité à élément tubulaire, en particulier pour véhicule automobile**

(30) Priorité: 29.04.1993 FR 9305069
(71) Demandeur: HUTCHINSON, F-75008 Paris (FR)
(72) Inventeur: Guillon, Henri, F-45700 Saint-Maurice/Fessard (FR)
(74) Mandataire: Doireau, Marc

(57) **Abrégé**

Dispositif d'étanchéité comportant un élément de fixation (2) au bâti ou à la caisse d'un véhicule automobile et un élément tubulaire (5) avec lequel est propre à coopérer une partie mobile du véhicule, comme une porte par exemple. L'élément tubulaire (5) comprend une enveloppe externe (11), un noyau central (12), coaxial à ladite enveloppe (11), et une pluralité de membranes de raccordement (13) qui s'étendent chacune entre la périphérie externe du noyau central (12) et la périphérie interne de l'enveloppe (11) de l'élément tubulaire (5).

Un tel dispositif d'étanchéité permet d'améliorer le côté esthétique de l'élément tubulaire (5) et contribue à l'amélioration de l'isolation phonique.

## Description

La présente invention concerne un dispositif d'étanchéité comportant un élément de fixation au bâti ou à la caisse d'un véhicule automobile et un élément tubulaire élastiquement déformable avec lequel est propre à coopérer une partie mobile du véhicule, comme une porte, un capot de moteur ou de coffre, ou analogue.

D'une manière générale, l'élément tubulaire est essentiellement destiné à procurer l'étanchéité requise à l'eau d'une part, et contribuer à l'isolation phonique d'autre part. Cependant, cet élément tubulaire doit également épouser les formes de son support en respectant diverses exigences fonctionnelles telles que l'aspect esthétique, l'accostage, etc..., lesquelles ne sont pas toujours remplies, notamment lorsque des déformations locales sont imposées à l'élément tubulaire, ce qui provoque généralement l'apparition de plis, d'ondulations, de frisures superficielles, etc....

Ces inconvénients qui peuvent compromettre l'étanchéité et la facilité de fermeture d'une porte par exemple, sont également particulièrement gênants pour des applications où l'élément tubulaire est garni d'un revêtement textile comme du velours, un aspect irrégulier de ce dernier étant inacceptable pour des véhicules de prix élevé qu'ils équipent et où ils sont mis en oeuvre précisément pour donner un aspect de qualité exceptionnelle.

Le but de l'invention est d'améliorer notamment une mise en courbure de l'élément tubulaire de ces joints d'étanchéité en supprimant toute déformation susceptible de nuire à l'aspect esthétique du dispositif, et d'améliorer également l'isolation phonique, en particulier aux basses fréquences.

A cet effet, l'invention propose un dispositif d'étanchéité du type précité et qui est caractérisé en ce que l'élément tubulaire comprend une enveloppe externe, un noyau central interne, coaxial à ladite enveloppe, et une pluralité de membranes de raccordement qui s'étendent chacune entre la périphérie externe du noyau et la périphérie interne de l'enveloppe externe de l'élément tubulaire.

Selon une autre caractéristique de l'invention, chaque membrane s'étend radialement sur sensiblement toute la longueur de l'élément tubulaire.

Selon encore une autre caractéristique de l'invention, le noyau central est creux.

D'une manière générale, l'élément tubulaire du dispositif d'étanchéité est réalisé en un matériau élastiquement déformable, tel que du caoutchouc cellulaire, est fabriqué par extrusion et est par exemple fixé à l'élément de fixation par collage pour constituer un dispositif d'étanchéité prêt à l'utilisation.

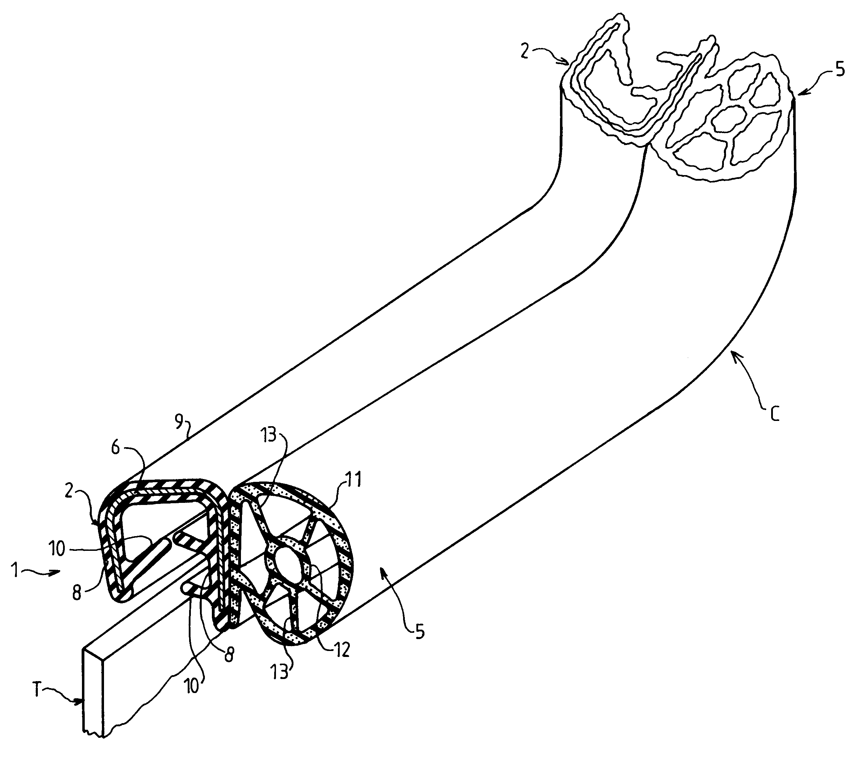

D'autres avantages, caractéristiques et détails de l'invention ressortiront de la description explicative qui va suivre, faite en référence au dessin annexé donné uniquement à titre d'exemple et qui représente en perspective un mode de réalisation du dispositif d'étanchéité selon l'invention.

Un dispositif d'étanchéité 1 selon l'invention comprend un élément de fixation 2 formant pince à section droite en π, pour le fixer sur la tôle T du bâti ou de la caisse d'un véhicule automobile, et un élément d'étanchéité tubulaire 5 élastiquement déformable.

L'élément de fixation 2, d'une façon connue en soi, comporte par exemple une armature 6 noyée dans une matrice en matériau élastomère ou plastomère ménageant deux ailes latérales 8 et un dos 9.

Cet élément de fixation 2 comporte également, sur ses faces internes, des lèvres 10 destinées au maintien du dispositif d'étanchéité 1 sur la tôle T. Ces lèvres 10 sont en le même matériau ou en un matériau différent de celui formant l'élément de fixation 2.

L'élément tubulaire 5 est destiné à assurer l'étanchéité entre le bâti et une partie mobile du véhicule, tel qu'une porte par exemple, ainsi que l'isolation phonique entre l'intérieur du véhicule et l'extérieur, et il comprend une enveloppe externe 11, un noyau central interne 12, coaxial à ladite enveloppe 11, et une pluralité de membranes de raccordement 13 entre la périphérie externe du noyau central 12 et la périphérie interne de l'enveloppe 11 de l'élément tubulaire 5.

D'une façon préférentielle, le noyau central 12 est creux, et chaque membrane 13 s'étend radialement sur sensiblement toute la longueur de l'élément tubulaire 5.

L'élément tubulaire 5 est avantageusement réalisé en caoutchouc cellulaire et fabriqué par extrusion.

L'élément de fixation 2 et l'élément tubulaire 5 peuvent être fixés l'un à l'autre par collage par exemple, ou coextrudés sur l'armature 6.

Comme cela est visible sur le dessin, lorsque le dispositif d'étanchéité est replié pour épouser la forme d'un encadrement de porte, on évite la formation de plis au niveau de la courbure C de l'élément tubulaire 5.

Ainsi, l'élément tubulaire 5 contribue à renforcer l'aspect esthétique du dispositif d'étanchéité, et l'expérience montre qu'il contribue également à renforcer l'isolation phonique, notamment aux basses fréquences.

D'une manière générale, la section droite de l'élément tubulaire 5 peut être de forme circulaire, ovale, ou analogue, et le nombre de membranes 13 est avantageusement au moins égal à deux, sachant que plus il y a de membranes et moins le bruit passe au travers du dispositif d'étanchéité. Enfin, l'élément de fixation 2 associé à l'élément tubulaire 5 peut être différent de celui décrit précédemment.

## Revendications

1. Dispositif d'étanchéité comportant un élément de fixation au bâti ou à la caisse d'un véhicule automobile et un élément tubulaire élastiquement déformable avec lequel est propre à coopérer une partie mobile du véhicule, comme une porte, un capot de moteur ou de coffre, ou analogue, caractérisé en ce que l'élément tubulaire (5) comprend une enveloppe externe (11), un noyau central interne (12), coaxial à ladite enveloppe (11), et une pluralité de membranes de raccordement (13) qui s'étendent chacune entre la périphérie externe du noyau central (12) et la périphérie interne de l'enveloppe externe (11) de l'élément tubulaire (5).

2. Dispositif d'étanchéité selon la revendication 1, caractérisé en ce que chaque membrane (13) s'étend radialement sur sensiblement toute la longueur de l'élément tubulaire (5).

3. Dispositif d'étanchéité selon la revendication 1 ou 2, caractérisé en ce que le noyau central (12) est creux.

4. Dispositif d'étanchéité selon l'une quelconque des revendications précédentes, caractérisé en ce que l'élémen tubulaire (5) est réalisé en un matériau cellulaire et fabriqué par extrusion.

5. Dispositif d'étanchéité selon l'une quelconque des revendications précédentes, caractérisé en ce que l'élément tubulaire (5) est fixé par collage à l'élément de fixation (2), par exemple.
